# EUROPÄISCHE PATENTANMELDUNG

(11) **EP 4 686 543 A1**
(43) Veröffentlichungstag der Anmeldung: **04.02.2026**
(21) Anmeldenummer: 25205842.5
(22) Anmeldetag: 30.09.2025
(51) Int. Cl.: B29C 39/02, B29C 39/10, H02G 5/00

(54) **VERFAHREN ZUM UMMANTELN EINES FLEXIBLEN TOLERANZAUSGLEICHSABSCHNITTS EINER STROMSCHIENE, STROMSCHIENE UND STROMSCHIENENSTAPEL SOWIE STROMVERTEILUNGSNETZ**

(30) Priorität: 31.07.2024 DE 102024121844
(71) Anmelder: Lisa Dräxlmaier GmbH, 84137 Vilsbiburg (DE)
(72) Erfinder: Kozam, Sebatian, 84137 Vilsbiburg (DE); Weiß, Thomas, 84137 Vilsbiburg (DE); Frank, Valentin, 84137 Vilsbiburg (DE)

(57) **Zusammenfassung**

Die Erfindung betrifft ein Verfahren zum Ummanteln eines flexiblen Toleranzausgleichsabschnitts (1) einer Stromschiene (2), die Stromschiene (2), einen die Stromschiene (2) aufweisenden Stromschienenstapel (3) sowie ein Stromverteilungsnetz, das die Stromschiene (2) und/oder den Stromschienenstapel (3) aufweist. Beim Verfahren werden zwei eigenformstabile Stromschienenabschnitte (4, 5) der Stromschiene (2) mittels des Toleranzausgleichsabschnitts (1) elektrisch leitend und mechanisch miteinander verbunden, und danach wird ein Isoliermantelmaterial (9) in zunächst flüssigem oder pastösem Zustand an den Toleranzausgleichsabschnitt (1) angebracht, welches zu einem elektrisch isolierenden Isoliermantel (6) ausreagiert, wodurch der Toleranzausgleichsabschnitt (1) mit dem Isoliermantel (6) ummantelt wird. Beim Stromschienenstapel (3) sind zwei oder mehr solcher Stromschienen (2) entlang ihrer Längserstreckungsrichtung elektrisch voneinander isoliert und entlang einer Stapelrichtung (z) einander berührend gestapelt, wobei die Isoliermäntel (6) der Toleranzausgleichsabschnitte (1) einander richtungs- und flächenparallel berühren.

## Beschreibung

### Technisches Gebiet

Die vorliegende Erfindung betrifft ein Verfahren zum Ummanteln eines flexiblen Toleranzausgleichsabschnitts einer Stromschiene sowie eine Stromschiene, die einen solchen elektrisch isolierend ummantelten Toleranzausgleichsabschnitt aufweist. Ferner betrifft die Erfindung einen Stromschienenstapel, bei dem zwei oder mehr Stromschienen einander berührend gestapelt sind. Zudem betrifft die Erfindung ein Stromverteilungsnetz, das die Stromschiene und/oder den Stromschienenstapel aufweist.

### Stand der Technik

Es ist bekannt, in einem Stromverteilungsnetz Leiterelemente, insbesondere Stromschienen, mit flexiblen, also zum Beispiel biegeschlaffen oder zumindest reversibel federartig bewegbaren Toleranzausgleichsabschnitten einzusetzen, siehe zum Beispiel DE 10 2023 100 135 A1. Diese Toleranzausgleichsabschnitte müssen zum einen voneinander elektrisch isoliert werden und zum anderen gegen unerwünschtes Eindringen von Flüssigkeiten abgedichtet werden. Hierzu ist es denkbar, ein Schlauchgebilde, etwa eine Tülle, einen Schrumpfschlauch, einen Glasseidenschlauch etc., einzusetzen. Indem das Schlauchgebilde eng am jeweiligen Toleranzausgleichsabschnitt anliegt, ist dieser zwar von anderen Toleranzausgleichsabschnitten isoliert und gegen Flüssigkeitseintritt abgedichtet, doch ist eine Herstellung einer einen derart ummantelten Toleranzausgleichsabschnitt aufweisenden Stromschiene besonders aufwändig. Denn beim Verbinden bzw. Verschweißen des Toleranzausgleichsabschnitts mit einem weiteren, beispielsweise eigenformstabilen/starren Abschnitts derselben Stromschiene kann es dazu kommen, dass das bereits auf den Toleranzausgleichsabschnitt aufgeschobene Schlauchgebilde beschädigt wird. Ein Aufschieben auf eine bereits fertig verschweißte Stromschiene gestaltet sich aufgrund von Biegungen der Stromschiene und/oder des Toleranzausgleichsbereichs ebenso besonders schwierig.

### Beschreibung der Erfindung

Aufgabe der vorliegenden Erfindung ist es, eine Möglichkeit zu schaffen, um einen Toleranzausgleichsabschnitt einer Stromschiene besonders effizient mit einem Isoliermantel zu versehen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Gemäß der Erfindung wird ein Verfahren zum Ummanteln eines flexiblen Toleranzausgleichsabschnitts einer Stromschiene vorgeschlagen. Durch die Stromschiene, die den mittels des Verfahrens hergestellten/ausgebildeten Toleranzausgleichsbereich aufweist, ist ein weiterer erfindungsgemäßer Gegenstand gebildet. Überdies wird ein Stromschienenstapel gemäß der Erfindung vorgeschlagen, bei welchem zwei oder mehr der Stromschienen gestapelt sind, wobei die Stromschienen voneinander elektrisch isoliert sind, sich aber dennoch berühren. Weiter wird gemäß der Erfindung ein Stromverteilungsnetz vorgeschlagen, dass die Stromschiene bzw. zwei oder mehr solcher Stromschienen und/oder den Stromschienenstapel bzw. zwei oder mehr solcher Stromschienenstapel aufweist. Bei dem Stromverteilungsnetz handelt es sich insbesondere um ein Hochspannungsbordnetz für ein Kraftfahrzeug, wobei im Betrieb des Kraftfahrzeugs über das Stromverteilungsnetz bzw. Hochspannungsbordnetz elektrische Energie zwischen einer Batterie, insbesondere Traktionsbatterie, des Kraftfahrzeugs und einem Hochspannungsverbraucher, insbesondere einer elektrischen Traktionsmaschine, des Kraftfahrzeugs und/oder einer elektrischen Ladeeinheit (Ladeschnittstelle) des Kraftfahrzeugs verteilt wird. Ein entsprechend ausgerüstetes Kraftfahrzeug ist demnach ein reinelektrisch oder hybridelektrisch antreibbares Kraftfahrzeug. Obwohl hierin zur Beschreibung der Erfindung hauptsächlich auf ein Kraftfahrzeug-Hochspannungsbordnetz eingegangen wird, ist zu verstehen, dass Einsätze der erfindungsgemäßen Stromschiene bzw. des erfindungsgemäßen Stromschienenstapels sowie des erfindungsgemäßen Stromverteilungsnetzes in anderen Bereichen der Technik, in denen Stromschienen, insbesondere Flachleiter, zum Übertragen hoher elektrischer Ströme Anwendung finden, zum Beispiel Kraftwerkstechnik etc., durch die vorliegende Offenbarung mitumfasst sind.

Die Stromschiene weist zwei eigenformstabile Stromschienenabschnitte und einen flexiblen Toleranzausgleichsabschnitt auf. Mittels des Toleranzausgleichsabschnitts sind die beiden Stromschienenabschnitte elektrisch leitend und mechanisch miteinander verbunden. Das bedeutet, der Toleranzausgleichsabschnitt ist einerseits mit einem der Stromschienenabschnitte und andererseits mit dem anderen der Stromschienenabschnitte elektrisch leitend und mechanisch verbunden, beispielsweise verschweißt. Die Stromschiene ist insbesondere als ein Flachleiter ausgebildet, was bedeutet, dass zumindest die Stromschienenabschnitte jeweils durch einen massiven Metallblechstreifen gebildet sind. Als Metallmaterial für die Stromschienenabschnitte ist insbesondere Kupfer oder Aluminium vorgesehen. Ein Flachleiter, das heißt hier der jeweilige Stromschienenabschnitt, zeichnet sich dadurch aus, dass zum einen dessen Breite gegenüber dessen Stärke/Dicke dominant ist und zum anderen dessen Länge gegenüber dessen Breite dominant ist. Andere Gestalten der Stromschiene bzw. Stromschienenabschnitte sind natürlich genauso gut denkbar, beispielsweise zylindrische Gestalten. Der Toleranzausgleichsabschnitt weist im Vergleich mit den Stromschienenabschnitten einen wesentlich geringeren Biegewiderstand auf. Der Toleranzausgleichsabschnitt lässt sich also viel leichter biegen als die Stromschienenabschnitte, sodass der Toleranzausgleichsabschnitt im Vergleich zu den Stromschienenabschnitten sich als flexibel darstellt, wohingegen die Stromschienenabschnitte sich als eigenformstabil bzw. starr darstellen. Beispielsweise handelt es sich bei dem Toleranzausgleichsabschnitt um ein Geflecht aus elektrisch leitenden Drähten oder um eine sonstige leicht biegbare elektrisch leitende Struktur.

Insbesondere ist vorgesehen, dass der Toleranzausgleichsabschnitt aus einer Vielzahl von übereinander gestapelten Metallstreifen gebildet ist, wobei die Metallstreifen an ihren Breitseiten nicht miteinander verbunden bzw. gefügt sind. Es werden insbesondere so viele Metallstreifen übereinandergestapelt und mit den Stromschienenabschnitten elektrisch leitend und mechanisch verbunden, dass durch die übereinandergestapelten Metallstreifen zumindest ein Großteil, insbesondere über 90 %, des durch die Stromschienenabschnitte bereitgestellten Leitungsquerschnitts bereitgestellt wird. Da die Metallstreifen - einzeln betrachtet - einen signifikant geringeren Leitungsquerschnitt als die Stromschienenabschnitte aufweisen, sind die Metallstreifen besonders einfach biegbar, was zum gegenüber den Stromschienenabschnitten signifikant verringerten Biegewiderstand des Toleranzausgleichsabschnitts führt. Es ist nicht erforderlich, die Metallstreifen des Toleranzausgleichsabschnitts voneinander elektrisch zu isolieren, jedoch besteht der Bedarf, den Toleranzausgleichsabschnitt außenumfangsseitig mit einer Isolierung zu versehen. Daher ist bei der erfindungsgemäßen Stromschiene der Toleranzausgleichsabschnitt mit einem Isoliermantel ummantelt.

Um einen für das Stromverteilungsnetz zur Verfügung gestellten Bauraum möglichst effizient zu nutzen und/oder um elektromagnetische Auskopplungen bzw. Abstrahlungen aus den Stromschienen des Stromverteilungsnetzes möglichst gering zu halten, insbesondere vollständig zu kompensieren, können zwei oder mehr Stromschienen entlang einer Stapelrichtung einander berührend gestapelt werden. So wird der erfindungsgemäße Stromschienenstapel gebildet, wobei die gestapelten Stromschienen entlang ihrer Längserstreckungsrichtung elektrisch voneinander isoliert sind, und die Isoliermantel der Toleranzausgleichsabschnitte der Stromschienen des Stromschienenstapels einander richtungs- und flächenparallel berühren. Ein solcher Stromschienenstapel, der genau zwei Stromschienen aufweist, die entsprechend gestapelt sind, kann als Doppelstromschiene bezeichnet werden. Hierbei ist im Zusammenhang mit dem Stromverteilungsnetz insbesondere vorgesehen, dass die Stromschienen der Doppelstromschiene derart in das Stromverteilungsnetz integriert sind, dass sie im Betrieb des Stromverteilungsnetzes einander entgegengesetzt von elektrischem Strom durchflossen werden. Beispielsweise kann eine der Stromschienen der Doppelstromschiene mit einem Pluspol einer Energiequelle des Stromverteilungsnetzes, insbesondere der Traktionsbatterie, gekoppelt sein, wohingegen die andere der Stromschienen mit einem Minuspol derselben Energiequelle bzw. Traktionsbatterie gekoppelt sein kann.

Die Stromschiene ist zumindest teilweise durch ihr Herstellungsverfahren gekennzeichnet. Denn der Toleranzausgleichsabschnitt der jeweiligen Stromschiene ist mittels des erfindungsgemäßen Verfahrens zum Ummanteln eines flexiblen Toleranzausgleichsabschnitts einer Stromschiene gebildet. Zum Herstellen der Stromschiene bzw. beim Verfahren zum Ummanteln des flexiblen Toleranzausgleichsabschnitts der Stromschiene werden zunächst die zwei eigenformstabilen Stromschienenabschnitte der Stromschiene mittels des Toleranzausgleichsabschnitts elektrisch leitend und mechanisch miteinander verbunden. Insbesondere werden die Stromschienenabschnitte jeweils mit dem Toleranzausgleichsabschnitt verschweißt. Nachdem die Stromschienenabschnitte und der Toleranzausgleichsabschnitt elektrisch leitend und mechanisch miteinander verbunden sind, wird bei dem Verfahren ein Isoliermantelmaterial in zunächst flüssigem oder pastösem Zustand an den Toleranzausgleichsabschnitt angebracht. Das zunächst flüssige oder pastöse Isoliermantelmaterial reagiert zu einem elektrisch isolierenden Isoliermantel, wodurch der Toleranzausgleichsabschnitt mit dem Isoliermantel ummantelt wird. Mit anderen Worten wird der Isoliermantel direkt am Toleranzausgleichsabschnitt gebildet, indem das an den Toleranzausgleichsabschnitt angebrachte Isoliermantelmaterial zum Isoliermantel ausreagiert, sich insbesondere verfestigt. Insbesondere ist vorgesehen, dass das Isoliermantelmaterial im flüssigen oder pastösen Zustand direkt an den Toleranzausgleichsabschnitt angebracht wird, das heißt zwischen den Isoliermantelmaterial und dem Toleranzausgleichsabschnitt bzw. dessen Material ist keine Schicht aus einem anderen Material angeordnet. Das Isoliermantelmaterial wird zur Verarbeitung im Rahmen des Verfahrens beispielsweise als gieß- und/oder spritzfähige Masse bereitgestellt und dann an den Toleranzausgleichsabschnitt angegossen und/oder angespritzt. Eine Viskosität des Isoliermantelmaterials, das an den Toleranzausgleichsabschnitt angebracht wird, wird dabei derart eingestellt, dass es in ausreichendem Maße am Toleranzausgleichsabschnitt haften bleibt, sodass es unter dem Ausreagieren nicht vom Toleranzausgleichsabschnitt herabgleitet, herabtropft oder herabfällt. Als Isoliermantelmaterial kommt beispielsweise ein spritz- bzw. gießbares Kunststoff- und/oder Schaummaterial in Frage. Insbesondere wird das Isoliermantelmaterial derart gewählt, dass es im ausreagierten Zustand, das heißt als der Isoliermantel, zur Isolierung von im Elektroautomobilbereich auftretenden Hochspannungen (beispielsweise mehr als 400 Volt oder mehr als 1000 Volt) sicher isolieren kann.

Indem erst nach dem Verbinden der Stromschienenabschnitte mit dem Toleranzausgleichsabschnitt der Isoliermantel am Toleranzausgleichsabschnitt gebildet bzw. hergestellt wird, ist vermieden, dass der Isoliermantel durch einen Verbindungsvorgang, bei welchem der Toleranzausgleichsabschnitt und die Stromschienenabschnitte miteinander verbunden werden, in Mitleidenschaft gezogen wird. Es ist weiter in vorteilhafter Weise vermieden, dass auf den eventuell kompliziert geformten, eventuell mehrfach gebogenen Toleranzausgleichsabschnitt ein schlauchartiges Gebilde aufgezogen werden muss, wodurch ein Herstellen der gesamten Stromschiene signifikant erleichtert ist. Zudem ist ein solches Aufziehen bzw. Aufschieben des schlauchartigen Gebildes derzeit nur mit erheblichem Aufwand automatisierbar, wohingegen das Anbringen des flüssigen bzw. pastösen Isoliermantelmaterials an den Toleranzausgleichsabschnitt in vorteilhafter Weise besonders einfach automatisierbar ist. So ist es ermöglicht, das Herstellen bzw. Ausbilden des Isoliermantels am Toleranzausgleichsabschnitt mittels eines Industrieroboters oder dergleichen ausführen zu lassen.

Einer weiteren möglichen Ausführungsform zufolge wird der Toleranzausgleichsabschnitt in eine vorgegebene Toleranzausgleichspose angeordnet und in dieser fixiert, und danach wird das flüssige oder pastöse Isoliermantelmaterial an den in der Toleranzausgleichspose fixierten Toleranzausgleichsabschnitt angebracht. In der Toleranzausgleichspose weist der Toleranzausgleichsabschnitt zumindest zwei gegenläufige Biege- bzw. Richtungsänderungsstellen auf, wodurch mittels des Toleranzausgleichsabschnitts bzw. mittels dessen Biegestellen eine Längendifferenz zwischen zwei Befestigungspunkten, an denen die Stromschiene befestigt wird oder ist, kompensiert werden kann. Indem das Isoliermantelmaterial an den Toleranzausgleichsabschnitt angebracht wird, während dieser in der Toleranzausgleichspose fixiert ist, wird zwischen dem Toleranzausgleichsabschnitt und dem Isoliermantelmaterial bzw. dem Isoliermantel eine besonders zuverlässige Verbindung hergestellt. Zudem wird dem Isoliermantel eine der Toleranzausgleichspose entsprechende Form verliehen.

Gemäß einer weiteren möglichen Ausgestaltung ist vorgesehen, dass als das Isoliermantelmaterial ein Material eingesetzt wird, das unter dessen Ausreagieren zu einem eigenformstabilen Isoliermantel führt, wodurch der Toleranzausgleichsabschnitt in einer Pose eigenformstabil wird, in der er unter dem Ausreagieren des Isoliermantelmaterials fixiert ist. Insbesondere ist hierbei vorgesehen, dass der Toleranzausgleichsabschnitt in die Toleranzausgleichspose angeordnet und dann mit dem Isoliermantelmaterial ummantelt wird, das zu dem eigenformstabilen Isoliermantel führt. Auf diese Weise wird eine erwünschte Eigenstabilität des Isoliermantels mit einer erwünschten Flexibilität des Toleranzausgleichsabschnitts kombiniert. Anders ausgedrückt: Zwar verbleibt der Toleranzausgleichsabschnitt in der Pose - insbesondere der Toleranzausgleichspose -, in der das Isoliermantelmaterial an den Toleranzausgleichsabschnitt angebracht wurde, dennoch ist ein reversibel flexibles Bewegen des Toleranzausgleichsabschnitts zum Ausgleichen/Kompensieren von Längen- und/oder Lagetoleranzen gewährleistet. Beim Bewegen des Toleranzausgleichsabschnitts wird der Isoliermantel entsprechend reversibel elastisch mitbewegt bzw. verformt.

Bei dem Verfahren ist in weiterer möglicher Ausführungsform vorgesehen, dass der Toleranzausgleichsabschnitt zum Anbringen des flüssigen bzw. pastösen Isoliermantelmaterials in eine Umspritzkavität eingelegt wird, und das Isoliermantelmaterial in die Umspritzkavität eingespritzt und infolgedessen an den Toleranzausgleichsabschnitt angespritzt wird. Hierdurch ist es auf besonders einfache und effiziente Weise ermöglicht, dem Isoliermantel eine erwünschte Außengestalt bzw. Außenkontur zu verleihen, indem eine entsprechend geformte Umspritzkavität eingesetzt wird.

Eine mögliche Weiterbildung hierzu sieht vor, dass die Umspritzkavität mit einer Kavitätsgeometrie bereitgestellt wird, die verursacht, dass der Toleranzausgleichsabschnitt beim Einlegen in die Umspritzkavität in der Toleranzausgleichspose fixiert wird. Das bedeutet, die Umspritzkavität bzw. deren Kavitätsgeometrie ist derart ausgebildet bzw. geformt, dass der Toleranzausgleichsabschnitt in die Toleranzausgleichspose gezwungen wird, indem er in die Umspritzkavität bzw. in die Kavitätsgeometrie eingelegt wird.

Im Zusammenhang mit der Umspritzkavität ist in weiterer möglicher Ausführungsform des Verfahrens vorgesehen, dass der Toleranzausgleichsabschnitt in einen ersten Kavitätsteil der Umspritzkavität eingelegt wird, in welcher an einen ersten Queranteil des Toleranzausgleichsabschnitts über dessen Längserstreckung ein erster Isoliermantelmaterialanteil des Isoliermantelmaterials angebracht wird. Der Toleranzausgleichsabschnitt wird dann mitsamt dem daran angebrachten ersten Isoliermantelmaterialanteil aus dem ersten Kavitätsteil entnommen und dann in einen zweiten Kavitätsteil der Umspritzkavität eingelegt. Im zweiten Kavitätsteil wird an einen noch von Isoliermantelmaterial freien, zweiten Queranteil des Toleranzausgleichsabschnitts über dessen Längserstreckung ein zweiter Isoliermantelmaterialanteil des Isoliermantelmaterials angebracht, wodurch der Toleranzausgleichsabschnitt mittels der beiden Isoliermantelmaterialanteile außenumfangsseitig umschlossen wird. Unter einem Ausreagieren der beiden Isoliermantelmaterialanteile wird somit der Toleranzausgleichsabschnitt mit dem Isoliermantel ummantelt, da durch die beiden ausreagierenden Isoliermantelmaterialanteile der Isoliermantel gebildet wird. Durch Einsatz einer solchen Umspritzkavität bzw. durch das zweistufige Umspritzen des Toleranzausgleichsabschnitts kann die Stromschiene mit besonders hoher Wiederholgenauigkeit einfach hergestellt werden. Es ist dabei insbesondere denkbar, dass das zweistufige Umspritzen des Toleranzausgleichsabschnitts teil- oder vollautomatisiert erfolgt.

Eine weitere mögliche Ausgestaltung sieht vor, dass im zweiten Kavitätsteil die beiden Isoliermantelmaterialanteile unter Anbringen des zweiten Isoliermantelmaterialanteils stoffschlüssig miteinander verbunden werden. Mit anderen Worten entsteht beim Ausreagieren der beiden Isoliermantelmaterialanteile ein nahtloser Isoliermantel. Es kann hierzu beispielsweise vorgesehen sein, dass der Toleranzausgleichsabschnitt in den zweiten Kavitätsteil eingelegt wird, während der daran angebrachte, erste Isoliermantelmaterialanteil noch nicht vollständig ausreagiert ist. Dann wird der zweite Isoliermantelmaterialanteil an den Toleranzausgleichsabschnitt angebracht, wodurch dieser in Kontakt mit dem noch nicht vollständig ausreagierten ersten Isoliermantelmaterialanteil kommt. Die beiden Isoliermantelmaterialanteile fließen so ineinander, wodurch sich beim Ausreagieren zwischen den Isoliermantelmaterialanteilen ein Stoffschluss ausbildet. Ferner kann vorgesehen sein, dass der zweite Isoliermantelmaterialanteil den ersten Isoliermantelmaterialanteil zumindest in einem Kontaktbereich wieder aufschmilzt, sodass im Kontaktbereich die beiden Isoliermantelmaterialanteile ineinanderfließen und dadurch der Stoffschluss zwischen den Isoliermantelmaterialanteilen gebildet wird. Durch den nahtlosen Isoliermantel ist der Toleranzausgleichsabschnitt besonders sicher gegen Eindringen einer Flüssigkeit etc. abgedichtet.

Unter dem Ausbilden des den Toleranzausgleichsabschnitt ummantelnden Isoliermantels wird gemäß einer weiteren möglichen Ausgestaltung ein stoffschlüssig mit dem Isoliermantel verbundenes Befestigungselement ausgebildet. Mittels des Befestigungselements sind der Toleranzausgleichsabschnitt und eine stromschienenexterne Struktur aneinander befestigbar. Bei der stromschienenexternen Struktur handelt es sich beispielsweise um ein Gehäuse, insbesondere ein Stromverteilungsnetzgehäuse, um ein Steckerelementgehäuse etc. Bei der stromschienenexternen Struktur kann es sich des Weiteren um einen Sensorkopf handeln, der mittels des Befestigungselements in vorteilhafter Weise besonders zuverlässig an der Stromschiene befestigbar ist. Der Sensorkopf ist zum Beispiel Teil einer Temperatursensorik des Stromverteilungsnetzes.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Perspektivansicht eines Stromschienenstapels, der zwei gestapelte Stromschienen aufweist,
- Fig. 2: eine schematische Perspektivansicht eines Längenabschnitts eines Toleranzausgleichsbereichs einer der Stromschienen, welcher mit einem Isoliermantel ummantelt wird, und in
- Fig. 3: eine schematische und geschnittene Ansicht auf einen Kavitätsteil einer Umspritzkavität, in welche der Toleranzausgleichsabschnitt zum Anbringen eines Isoliermantelmaterials eingelegt wird.

Im Folgenden werden ein Verfahren zum Ummanteln eines flexiblen Toleranzausgleichsabschnitts 1 einer Stromschiene 2 sowie die Stromschiene 2, ein zwei oder mehr Stromschienen 2 aufweisender Stromschienenstapel 3 und ein Stromverteilungsnetz (nicht dargestellt) in gemeinsamer Beschreibung erläutert. Dabei sind gleiche und funktionsgleiche Elemente in den Figuren mit gleichem Bezugszeichen versehen.

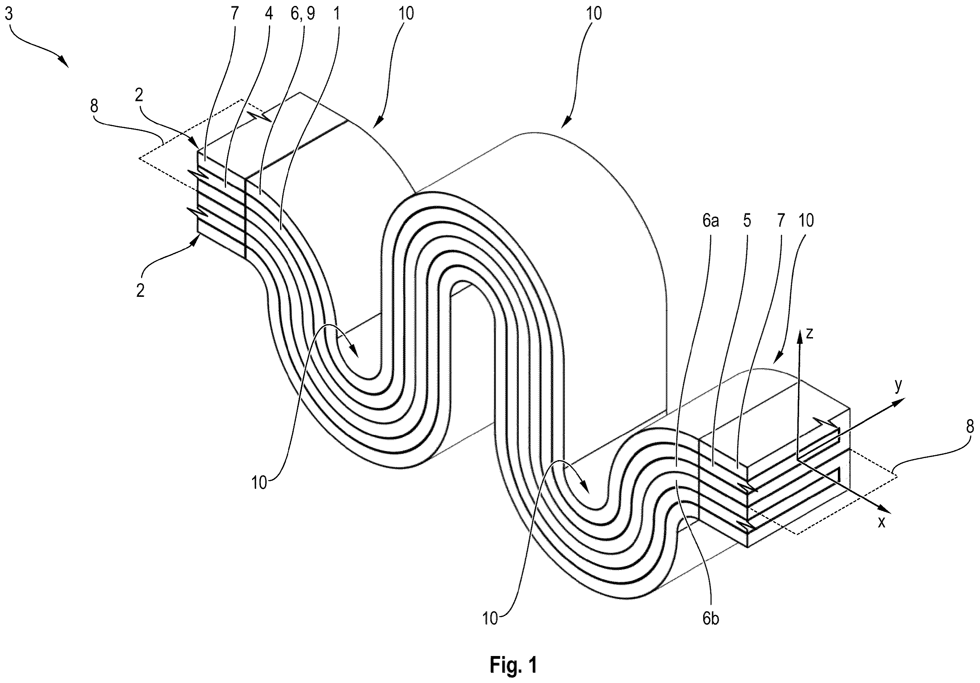

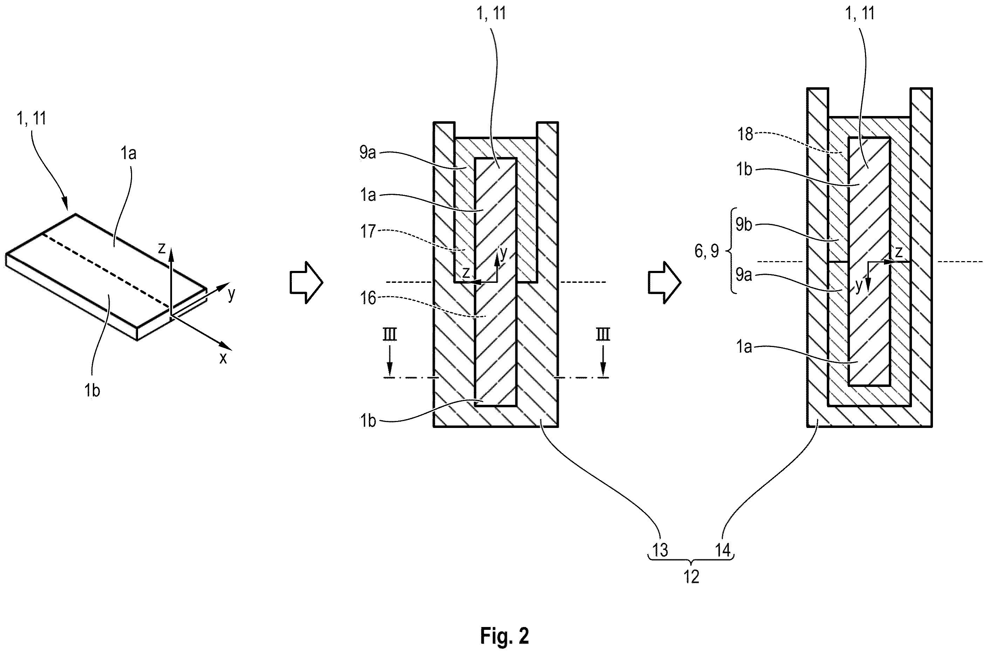

Das Stromverteilungsnetz weist zumindest eine Stromschiene 2 oder zwei oder mehr Stromschienen 2 auf. Hier im Beispiel weist das Stromverteilungsnetz den Stromschienenstapel 3 auf, welcher zwei Stromschienen 2 aufweist. Der Stromschienenstapel 3, der genau zwei Stromschienen 2 aufweist, kann als Doppelstromschiene bezeichnet werden. In Fig. 1 ist in schematischer Perspektivansicht ein solcher Stromschienenstapel 3 bzw. eine solche Doppelstromschiene dargestellt, wobei zu erkennen ist, dass beim Stromschienenstapel 3 zwei Stromschienen 2 entlang einer Stapelrichtung z einander berührend gestapelt sind. Die jeweilige Stromschiene 2 weist zwei eigenformstabile Stromschienenabschnitte 4, 5 sowie den Toleranzausgleichsabschnitt 1 auf. Mittels des Toleranzausgleichsabschnitts 1 sind die Stromschienenabschnitte 4, 5 elektrisch leitend und mechanisch miteinander verbunden, vorliegend verschweißt. Der jeweilige Toleranzausgleichsabschnitt 1 ist mit einem jeweiligen Isoliermantel 6 ummantelt, wobei der Isoliermantel 6 - wie im Weiteren noch detailliert erläutert wird - direkt an dem jeweiligen Toleranzausgleichsabschnitt 1 angeformt ist. Man erkennt weiter in Fig. 1, dass die Stromschienen 2 des Stromschienenstapels 3 entlang ihrer Längserstreckungsrichtung elektrisch voneinander isoliert sind, indem weder die Stromschienenabschnitte 4, 5 noch die Toleranzausgleichsabschnitte 1 einander direkt/unmittelbar berühren, sondern die Toleranzausgleichsabschnitte 1 durch zumindest eine Schicht des Isoliermantels 6 voneinander beabstandet bzw. elektrisch voneinander isoliert sind. Ferner sind die Stromschienenabschnitte 4, 5 jeweils elektrisch voneinander isoliert, indem diese individuell mit einer Isolierung 7 ummantelt sind. Die Isoliermäntel 6 der Toleranzausgleichsabschnitte 1 berühren beim Stromschienenstapel 3 einander richtungs- und flächenparallel. Mit anderen Worten sind die beiden Stromschienen 2 entlang eines gemeinsamen Geometriepfads 8 angeordnet, welcher in der Y- bzw. X-Z-Ebene der Stromschienenabschnitte 4, 5 liegt. Obwohl in Fig. 2 der Stromschienenstapel 3 lediglich als Doppelstromschiene dargestellt ist, ist es natürlich denkbar, dass auf diese Weise drei oder mehr Stromschienen 2 zu einem Stromschienenstapel 3 gestapelt bzw. angeordnet werden.

Beim Verfahren zum Ummanteln des flexiblen Toleranzausgleichsabschnitts 1 der Stromschiene 2 wird - sofern noch nicht geschehen - der Toleranzausgleichsabschnitt 1 endseitig mit den Stromschienenabschnitten 4, 5 elektrisch leitend und mechanisch verbunden. Vorliegend ist vorgesehen, dass der Toleranzausgleichsabschnitt 1 und die Stromschienenabschnitte 4, 5 miteinander verschweißt werden. Erst in diesem Zustand, das heißt, erst wenn der Toleranzausgleichsabschnitt 1 und die Stromschienenabschnitte 4, 5 elektrisch leitend und mechanisch miteinander verbunden sind, wird ein Isoliermantelmaterial 9, das in flüssigem oder pastösem Zustand bereitgestellt wird, an den Toleranzausgleichsabschnitt 1, insbesondere direkt an den Toleranzausgleichsabschnitt 1, angebracht. Das Isoliermantelmaterial 9 reagiert dann zum Isoliermantel 6 aus, wodurch der Toleranzausgleichsabschnitt 1 mit dem Isoliermantel 6 ummantelt wird. Der Isoliermantel 6 ist elektrisch isolierend, was bedeutet, dass das Isoliermantelmaterial 9 zumindest in dessen ausreagiertem Zustand elektrisch isolierend wirkt. Das Isoliermantelmaterial 9 ist beispielsweise ein spritz- bzw. gießfähiger Kunststoff, ein spritz- bzw. gießfähiges Schaummaterial etc. Es kann vorgesehen sein, dass unter dem Herstellen des Isoliermantels 6 bzw. unter dem Anbringen des Isoliermantelmaterials 9 an den Toleranzausgleichsabschnitt 1 im gleichen Prozess und/oder gleichzeitig die Isolierung 7 hergestellt wird. Insbesondere werden beim Herstellen des Isoliermantels 6 und/oder der Isolierung 7 der Isoliermantel 6 und die Isolierung 7 stoffschlüssig miteinander verbunden. Es kann weiter vorgesehen sein, dass der Isoliermantel 6 und die Isolierung 7 einstückig bzw. nahtlos miteinander ausgebildet werden.

Gemäß dem vorliegenden Beispiel ist vorgesehen, dass der Toleranzausgleichsabschnitt in eine vorgegebene Toleranzausgleichspose (siehe Fig. 1) angeordnet und in dieser fixiert wird, und danach das flüssige bzw. pastöse Isoliermantelmaterial 9 an den in der Toleranzausgleichspose fixierten Toleranzausgleichsabschnitt 1 angebracht wird. In der Toleranzausgleichspose weist der Toleranzausgleichsabschnitt 1 wenigstens zwei Richtungsänderungsstellen 10 auf, wobei im vorliegenden Beispiel die jeweilige Richtungsänderungsstelle 10 als ein jeweiliger Radius dargestellt ist. Als Isoliermantelmaterial 9 wird hier im Beispiel ein Material eingesetzt, das unter dessen Ausreagieren zum Isoliermantel 6 führt, der aufgrund der Materialeigenschaften des Isoliermantelmaterials 9 eigenformstabil wird. Dadurch wird der Toleranzausgleichsabschnitt 1 in der Pose - hier also der Toleranzausgleichspose - eigenformstabil, in welcher der Toleranzausgleichsabschnitt 1 unter dem Ausreagieren des Isoliermantelmaterials 9 fixiert ist. Unter Eigenformstabilität ist hierin zu verstehen, dass das hier als eigenformstabil beschriebene Element unter Abwesenheit externer Verformungskräfte seine verliehene Eigenform nicht verliert, aber durch auf das Element wirkende, externe Verformungskräfte elastisch reversibel in eine von der Eigenform abweichende Form bringbar ist. Entfallen diese Verformungskräfte wieder, nimmt das entsprechende Element seine Eigenform automatisch wieder ein. Die externen Verformungskräfte, die erforderlich sind, um den jeweiligen Stromschienenabschnitt 4, 5 bzw. den Isoliermantel 6 zu verformen, beispielsweise Biegekräfte, sind signifikant höher als Verformungs- bzw. Biegekräfte, die erforderlich sind, um den Toleranzausgleichsabschnitt 1 zu verformen. Denn der Toleranzausgleichsabschnitt 1 ist zumindest signifikant flexibler bzw. einfacher verformbar als die eigenformstabilen Stromschienenabschnitte 4, 5 bzw. der eigenformstabile Isoliermantel 6. Es kann vorgesehen sein, dass der Toleranzausgleichsabschnitt 1 biegeschlaff ausgebildet wird, was beispielsweise der Fall ist, wenn der Toleranzausgleichsabschnitt 1 als ein Drahtgeflechtgebilde ausgeführt wird.

Fig. 2 zeigt eine schematische Perspektivansicht eines Längenabschnitts 11 (gestreckt dargestellt) des Toleranzausgleichsabschnitts 1 einer der Stromschienen 2, wobei in Fig. 2 des Weiteren schematisch dargestellt ist, wie der Toleranzausgleichsabschnitt 1 bzw. der Längenabschnitt 11 mit dem Isoliermantel 6 ummantelt wird. Hier im Beispiel wird zunächst eine Umspritzkavität 12 bereitgestellt, die einen ersten Kavitätsteil 13 sowie einen zweiten Kavitätsteil 14 aufweist. Dabei weist die Umspritzkavität 12 eine Kavitätsgeometrie 15 auf, die derart ausgebildet bzw. geformt ist, dass der Toleranzausgleichsabschnitt 1 beim Einlegen in die Umspritzkavität 12 bzw. in den ersten Kavitätsteil 13 in die Toleranzausgleichspose (siehe Fig. 1) gezwungen wird. Solang der Toleranzausgleichsabschnitt 1 also in der Umspritzkavität 12 bzw. dem ersten Kavitätsteil 13 angeordnet ist, wird/ist er in der Toleranzausgleichspose gehalten.

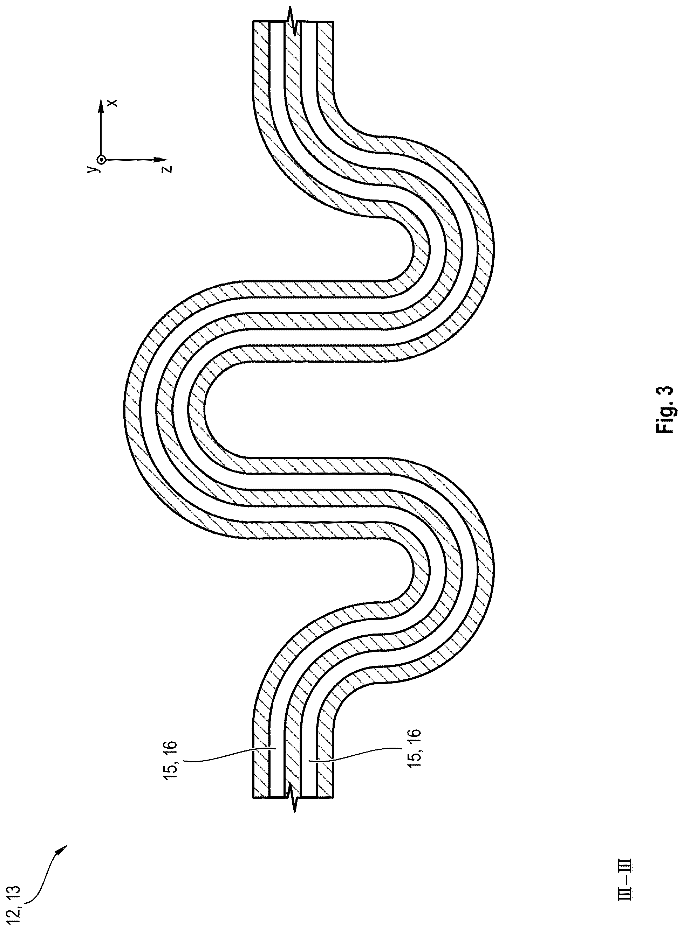

Hierzu zeigt Fig. 3 eine schematische und entlang der Schnittebene III-III (siehe Fig. 2) geschnittene Ansicht des ersten Kavitätsteils 13, in welchen der Toleranzausgleichsabschnitt 1 zum Anbringen des Isoliermantelmaterials 9 eingelegt wird. In Fig. 3 ist erkennbar, dass die Umspritzkavität 12 zwei Kavitätsgeometrien 15 aufweisen kann, was bedeutet, dass in die Umspritzkavität 12 zwei Toleranzausgleichsabschnitte 1 bzw. zwei Stromschienen 2 eingelegt werden können. Die beiden Toleranzausgleichsabschnitte 1 bzw. Stromschienen 2 werden dann im Verfahren gleichzeitig, das heißt mittels eines einzigen gemeinsamen Anbringprozesses mit dem Isoliermantelmaterial 9 ummantelt. Hierbei - siehe Fig. 1 - werden dann Isoliermantelanteile 6a, 6b, über welche die beiden Toleranzausgleichsabschnitte 1 entlang der Stapelrichtung z voneinander beabstandet und elektrisch isoliert sind, einstückig bzw. als identisches Element ausgebildet. Anders ausgedrückt werden die beiden Stromschienen 2 in einer möglichen Ausführungsform so in die Umspritzkavität 12 eingelegt, dass sie relativ zueinander so positioniert sind, wie sie beim fertigen Stromschienenstapel 3 zueinander positioniert sind. Erst hiernach wird der Isoliermantel 6 ausgebildet, wobei entlang der Stapelrichtung z zwischen den Toleranzausgleichsabschnitten 1 die Isoliermantelanteile 6a, 6b einstückig miteinander hergestellt werden.

Nachdem also der jeweilige Toleranzausgleichsabschnitt 1 in den ersten Kavitätsteil 13 bzw. in die entsprechende Kavitätsgeometrie 15 eingelegt wurde, wird an einen ersten Queranteil 1a des Toleranzausgleichsabschnitts 1 über dessen gesamte Längserstreckung ein erster Isoliermantelmaterialanteil 9a des Isoliermantelmaterials 9 angebracht. Es ist in Fig. 2 gut zu erkennen, wie der Toleranzausgleichsabschnitt 1 im ersten Kavitätsteil 13 angeordnet ist, nämlich dass der erste Queranteil 1a des Toleranzausgleichsabschnitts 1 aus einem Halterungsanteil 16 des ersten Kavitätsteils 13 herausragt und dadurch in einen Umspritzanteil 17 desselben Kavitätsteils 13 hineinragt. In den Umspritzanteil 17 des Kavitätsteils 13 wird dann der erste Isoliermantelmaterialanteil 9a - wie bereits erläutert - in flüssigem oder pastösem Zustand eingefüllt. Dadurch wird der in den Umspritzanteil 17 hineinragende Queranteil 1a des Toleranzausgleichsabschnitts 1 mit dem ersten Isoliermantelmaterialanteil 9a umspritzt bzw. umgossen. Der Toleranzausgleichsabschnitt 1 wird dann mitsamt dem daran angebrachten ersten Isoliermantelmaterialanteil 9a aus dem ersten Kavitätsteil 13 entnommen und in den zweiten Kavitätsteil 14 eingelegt, derart, dass der noch von Isoliermantelmaterial 9 freie, zweite Queranteil 1b des Toleranzausgleichsabschnitts 1 in einen zweiten Umspritzanteil 18 des zweiten Kavitätsteils 14 hineinragt. So im zweiten Kavitätsteil 14 angeordnet wird dann an den zweiten Queranteil 1b des Toleranzausgleichsabschnitts 1 über dessen gesamte Längserstreckung ein zweiter Isoliermantelmaterialanteil 9b des Isoliermantelmaterials 9 angebracht, wodurch der Toleranzausgleichsabschnitt 1 mittels der beiden Isoliermantelmaterialanteile 9a, 9b außenumfangsseitig vollständig umschlossen wird. Hier im Beispiel ist es des Weiteren vorgesehen, dass im zweiten Kavitätsteil 14 die beiden Isoliermantelmaterialanteile 9a, 9b unter Anbringung des zweiten Isoliermantelmaterialanteils 9b stoffschlüssig miteinander verbunden werden. Unter Ausreagieren der beiden Isoliermantelmaterialanteile 9a, 9b, das heißt unter Ausreagieren des gesamten Isoliermantelmaterials 9 wird der Isoliermantel 6 gebildet. Die Queranteile 1a, 1b sind beispielsweise zwei Querhälften des Toleranzausgleichsabschnitts 1, wie durch die gestrichelte Linie am gestreckt dargestellten Längenabschnitt 11 (links in Fig. 2) gezeigt ist.

Obwohl hierin lediglich das bis hierher beschriebene, zweistufige Spritz- bzw. Gießverfahren zum Erzeugen des Isoliermantels 6 beschrieben ist, ist es in alternativer Ausgestaltung des Verfahrens durchaus denkbar, dass das gesamte Isoliermantelmaterial 9 in einem einzigen ununterbrochenen Spritz- bzw. Gießschritt an den Toleranzausgleichsabschnitt 1 angebracht wird, welcher in einer zum Zeitpunkt des Einspritzens des Isoliermantelmaterials 9 geschlossenen Umspritzkavität angeordnet ist.

Vorliegend ist zudem vorgesehen, dass unter dem Ausbilden des den Toleranzausgleichsabschnitt 1 ummantelnden Isoliermantels 6 ein stoffschlüssig mit diesem verbundenes Befestigungselement (nicht dargestellt) ausgebildet wird, mittels dessen der Toleranzausgleichsabschnitt 1 und eine stromschienenexterne Struktur aneinander befestigbar sind. Auf diese Weise ist es beispielsweise möglich, die jeweilige Stromschiene 2 bzw. den jeweiligen Toleranzausgleichsabschnitt 1 mit Gehäuseteilen zu verbinden, wodurch Endstellen (beispielsweise von Stecksystemen) schwimmend in Bezug zum Toleranzausgleichsabschnitt 1 bzw. in Bezug zur Stromschiene 2 gelagert werden können.

Durch die Stromschiene 2, durch den Stromschienenstapel 3, durch das Stromverteilungsnetz sowie insbesondere durch das Verfahren zum Ummanteln des Toleranzausgleichsabschnitts 1 ist eine jeweilige Möglichkeit aufgezeigt, wie die eingangs erläuterte Aufgabe, eine Möglichkeit zu schaffen, den Toleranzausgleichsabschnitt 1 besonders effizient mit einem Isoliermantel zu versehen, gelöst werden kann.

Das hierin beschriebene Verfahren zeichnet sich insbesondere dadurch aus, dass es besonders einfach in einen voll- bzw. zumindest teilautomatisierten Betriebsprozess einbinden lässt. Hierbei könnte ein Anordnen bzw. Fixieren des Toleranzausgleichsabschnitts 1 in dessen Toleranzausgleichspose mittels eines Roboters in Zusammenspiel mit einer entsprechenden Gegenform ausgeführt werden. Ferner könnte die Positionierung des Toleranzausgleichsabschnitts 1 beim Anbringen bzw. Spritzen/Gießen des Isoliermantelmaterials 9 über Positionier- bzw. Auswerferstifte in der entsprechenden Kavität erfolgen, indem der Toleranzausgleichsabschnitt 1 mittels der Positionier- bzw. Auswerferstifte in Position gehalten wird. Sobald das flüssige/pastöse Isoliermantelmaterial 9 den Toleranzausgleichsabschnitt 1 - insbesondere als Blech- bzw. Lamellenpaket ausgebildet - in der Kavität bzw. im Werkszeug umschlossen hat, können die Positionier- bzw. Auswerferstifte zurückgezogen werden, wodurch das in diesem Zeitpunkt immer flüssig bzw. pastös vorliegende Isoliermantelmaterial 9 den Toleranzausgleichsabschnitt 1 vollständig umschließen kann. Mit anderen Worten fließt das Isoliermantelmaterial 9 an die Stellen, an denen zuvor die Positionier- bzw. Auswerferstifte den Toleranzausgleichsabschnitt 1 in Position gehalten haben.

Mittels des Isoliermantels 6 wird der Toleranzausgleichsabschnitt 1, wenn der Isoliermantel 6 eigenformstabil ausgebildet wird, in vorteilhafter Weise in der gewünschten Toleranzausgleichspose fixiert bzw. gehalten. Dadurch werden unnötige Bewegungen des Toleranzausgleichsabschnitts 1 über dessen Lebensdauer bzw. über die Lebensdauer des Stromverteilungsnetzes oder eines mit dem Stromverteilungsnetz ausgerüsteten Kraftfahrzeugs vermieden. Durch die Ummantelung bzw. durch den Isoliermantel 6 wird dem Toleranzausgleichsabschnitt 1 Eigenformstabilität verliehen, wobei der Toleranzausgleichsabschnitt 1 dennoch die erwünschte Flexibilität zum Längen- und/oder Lageausgleich aufweist.

### BEZUGSZEICHENLISTE

- 1: Toleranzausgleichsabschnitt
- 1a: Queranteil
- 1b: Queranteil
- 2: Stromschiene
- 3: Stromschienenstapel
- 4: Stromschienenabschnitt
- 5: Stromschienenabschnitt
- 6: Isoliermantel
- 6a: Isoliermantelanteil
- 6b: Isoliermantelanteil
- 7: Isolierung
- 8: Geometriepfad
- 9: Isoliermantelmaterial
- 9a: Isoliermantelmaterialanteil
- 9b: Isoliermantelmaterialanteil
- 10: Richtungsänderungsstelle
- 11: Längenabschnitt
- 12: Umspritzkavität
- 13: Kavitätsteil
- 14: Kavitätsteil
- 15: Kavitätsgeometrie
- 16: Halterungsanteil
- 17: Umspritzanteil
- 18: Umspritzanteil

## Patentansprüche

1. Verfahren zum Ummanteln eines flexiblen Toleranzausgleichsabschnitts (1) einer Stromschiene (2), wobei
- zwei eigenformstabile Stromschienenabschnitte (4, 5) der Stromschiene (2) mittels des Toleranzausgleichsabschnitts (1) elektrisch leitend und mechanisch miteinander verbunden werden,
- danach ein Isoliermantelmaterial (9) in zunächst flüssigem oder pastösem Zustand an den Toleranzausgleichsabschnitt (1) angebracht wird, welches zu einem elektrisch isolierenden Isoliermantel (6) ausreagiert, wodurch der Toleranzausgleichsabschnitt (1) mit dem Isoliermantel (6) ummantelt wird.

2. Verfahren nach Anspruch 1,
**dadurch gekennzeichnet, dass**
der Toleranzausgleichsabschnitt (1) in eine vorgegebene Toleranzausgleichspose angeordnet und in dieser fixiert wird, und danach das flüssige oder pastöse Isoliermantelmaterial (9) an den in der Toleranzausgleichspose fixierten Toleranzausgleichsabschnitt (1) angebracht wird.

3. Verfahren nach Anspruch 1 oder 2,
**dadurch gekennzeichnet, dass**
als Isoliermantelmaterial (9) ein Material eingesetzt wird, das unter dessen Ausreagieren zu einem eigenformstabilen Isoliermantel (6) führt, wodurch der Toleranzausgleichsabschnitt (1) in einer Pose eigenformstabil wird, in der er unter dem Ausreagieren des Isoliermantelmaterials (9) fixiert ist.

4. Verfahren nach einem der vorhergehenden Ansprüche,
**dadurch gekennzeichnet, dass**
der Toleranzausgleichsabschnitt (1) zum Anbringen des flüssigen oder pastösen Isoliermantelmaterials (9) in eine Umspritzkavität (12) eingelegt wird, und das Isoliermantelmaterial (9) in die Umspritzkavität (12) eingespritzt und infolgedessen an den Toleranzausgleichsabschnitt (1) angespritzt wird.

5. Verfahren nach Anspruch 4,
**dadurch gekennzeichnet, dass**
die Umspritzkavität (12) mit einer Kavitätsgeometrie (15) bereitgestellt wird, die verursacht, dass der Toleranzausgleichsabschnitt (1) beim Einlegen in die Umspritzkavität (12) in der Toleranzausgleichspose gemäß Anspruch 2 fixiert wird.

6. Verfahren nach Anspruch 4 oder 5,
**dadurch gekennzeichnet, dass**
- der Toleranzausgleichsabschnitt (1) in einen ersten Kavitätsteil (13) der Umspritzkavität (12) eingelegt wird, in welcher an einen ersten Queranteil (1a) des Toleranzausgleichsabschnitts (1) über dessen Längserstreckung ein erster Isoliermantelmaterialanteil (9a) des Isoliermantelmaterials (9) angebracht wird,
- der Toleranzausgleichsabschnitt (1) mitsamt dem daran angebrachten ersten Isoliermantelmaterialanteil (9a) aus dem ersten Kavitätsteil (13) entnommen wird,
- der Toleranzausgleichsabschnitt (1) mitsamt dem daran angebrachten ersten Isoliermantelmaterialanteil (9a) in einen zweiten Kavitätsteil (14) der Umspritzkavität (12) eingelegt wird, in welchem an einen zweiten Queranteil (1b) des Toleranzausgleichsabschnitts (1) über dessen Längserstreckung ein zweiter Isoliermantelmaterialanteil (9b) des Isoliermantelmaterials (9) angebracht wird, wodurch der Toleranzausgleichsabschnitt (1) mittels der beiden Isoliermantelmaterialanteile (9a, 9b) außenumfangsseitig umschlossen wird, und unter Ausreagieren der beiden Isoliermantelmaterialanteile (9a, 9b) der Isoliermantel (6) gebildet wird.

7. Verfahren nach Anspruch 6,
**dadurch gekennzeichnet, dass**
im zweiten Kavitätsteil (14) die beiden Isoliermantelmaterialanteile (9a, 9b) unter Anbringen des zweiten Isoliermantelmaterialanteils (9b) stoffschlüssig miteinander verbunden werden.

8. Verfahren nach einem der vorhergehenden Ansprüche,
**dadurch gekennzeichnet, dass**
unter dem Ausbilden des den Toleranzausgleichsabschnitt (1) ummantelnden Isoliermantel (6) ein stoffschlüssig mit diesem verbundenes Befestigungselement ausgebildet wird, mittels dessen der Toleranzausgleichsabschnitt (1) und eine stromschienenexterne Struktur aneinander befestigbar sind.

9. Stromschiene (2) mit zwei eigenformstabilen Stromschienenabschnitten (4, 5) und mit einem flexiblen Toleranzausgleichsabschnitt (1), mittels dessen die beiden Stromschienenabschnitte (4, 5) elektrisch leitend und mechanisch miteinander verbunden sind, wobei der Toleranzausgleichsabschnitt (1) mit einem Isoliermantel (6) ummantelt ist, der mittels eines nach einem der vorhergehenden Ansprüche ausgebildeten Verfahrens ausgebildet ist.

10. Stromschienenstapel (3) mit zwei oder mehr nach Anspruch 9 ausgeführten Stromschienen (2), die entlang ihrer Längserstreckungsrichtung elektrisch voneinander isoliert sind und entlang einer Stapelrichtung (z) einander berührend gestapelt sind, wobei die Isoliermäntel (6) der Toleranzausgleichsabschnitte (1) einander richtungs- und flächenparallel berühren.

11. Stromverteilungsnetz mit einer nach Anspruch 9 ausgeführten Stromschiene (2) und/oder mit einem nach Anspruch 10 ausgebildeten Stromschienenstapel (3).
